(19)

**Europäisches Patentamt**

**European Patent Office**

**Office européen des brevets**

(11) **EP 4 744 503 A1**

(12) **EUROPEAN PATENT APPLICATION**

(43) Date of publication:
20.05.2026 Bulletin 2026/21

(21) Application number: 24213572.1

(22) Date of filing: 18.11.2024

(51) International Patent Classification (IPC):
*A23G 9/14* (2006.01)  *A23G 9/16* (2006.01)
*A23G 9/20* (2006.01)  *A23G 9/26* (2006.01)
*A23G 9/28* (2006.01)  *A23G 9/46* (2006.01)
*A23G 9/48* (2006.01)  *A23G 9/50* (2006.01)
*A23G 9/22* (2006.01)

(52) Cooperative Patent Classification (CPC):
A23G 9/20; A23G 9/14; A23G 9/22; A23G 9/26;
A23G 9/285; A23G 9/46; A23G 9/48; A23G 9/503

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **MAGNUM IP HOLDINGS B.V.**
**1017 BM Amsterdam (NL)**

(72) Inventor: **The designation of the inventor has not
yet been filed**

(74) Representative: **Potter Clarkson**
**Chapel Quarter**
**Mount Street**
**Nottingham NG1 6HQ (GB)**

(54) **PROCESS FOR THE MANUFACTURE OF FROZEN CONFECTION**

(57)    A process for the manufacture of a continuous stream of aerated frozen confection, the process comprising the steps of feeding a chilled aerated frozen confection to the inlet of a pipe and the continuous stream of aerated frozen confection exiting via an outlet of the pipe, wherein the temperature of the pipe is raised such that the continuous stream of aerated frozen confection has an external temperature that is higher than a core temperature.

EP 4 744 503 A1

**Description**

**Field of the invention**

The invention relates to a process for the manufacture of a plurality of dimensionally similar frozen confections comprising a stick, and an apparatus for carrying out the process.

**Background of the invention**

Aerated frozen confections such as ice cream, is commonly produced by extruding a flow of continuous material that is then cut to produce the individual frozen confections. In a common arrangement, the extrusion is carried out vertically or horizontally on a belt after which the cut frozen confection falls under gravity onto a surface, which is then passed to a cooling tunnel to harden the frozen confection so that it can be passed through subsequent processing steps in a frozen state.

The use of extrusion to form frozen confections such as ice cream or sorbet are well-known. In an example of a commercial process, a continuous stream of extruded frozen confection is generated at around -6°C, which is cut into billets, and into which a stick may be inserted. Such processes are sometimes referred to as extrude-and-cut processes. In such processes a sequence of sticks is inserted, followed by the cutting, to produce a sequence of dimensionally similar sticked frozen confections. This is then followed by passing the sticked frozen confections through a hardening tunnel to reduce their temperature to around -18°C before subsequent processing steps such as coating, decorating and wrapping are carried out. This can produce the dimensionally similar frozen confections at a fast rate, e.g. around 180 per minute.

The standard manufacturing process for frozen aerated confections is described in detail in, for example, "Ice Cream", 6th Edition, chapters 6, 7 and 9. This consists of a number of steps: i) mixing the ingredients, ii) pasteurisation and homogenisation, iii) ageing, iv) aerating and partially freezing the mix in an ice cream freezer, and v) drawing the partially frozen aerated confection from the freezer, and vi) hardening.

US 2005/0214416 discloses extrusion of aerated ice cream or sorbets from a twin screw extruder.

US 2006/0233919 A1 discloses a process for manufacture of a frozen aerated confection, wherein an initial freezing step is carried out in a preliminary freezing and aeration step, followed by further freezing in a cold extrusion step. Examples of extrusion temperatures are in the range of from -9°C to -15°C. However, the torque required to extrude the ice cream increases significantly as the temperature of extrusion drops over this range.

US 6 228 412 discloses a mon-screw extrusion process for manufacturing frozen aerated products, particularly ice cream.

WO2009/068428 A1 discloses a method of producing an extruded, preferably unaerated, water-based frozen composition having a high ice content. In this case, the barrel is cooled with a coolant so as to form the frozen composition which remains extrudable, such as by a cooling jacket, but may be unchilled near the exit, so that the extruded confection may leave the extruder closer to ambient temperature.

However there remains a need to provide a continuous production of dimensionally similar sticked frozen confections at higher rates of production.

Summary of the Invention

The present invention relates to a process for the manufacture of a continuous stream of aerated frozen confection, the process comprising the steps of feeding a chilled aerated frozen confection to the inlet of a pipe and the continuous stream of aerated frozen confection exiting via an outlet of the pipe, wherein the temperature of the pipe is raised such that the continuous stream of aerated frozen confection has an external temperature that is higher than a core temperature.

Preferably a heating fluid is applied to a portion of the exterior of the pipe e.g. by use of a water jacket with an inlet temperature of less than 15°C, more preferably less than 10°C. For example, this may help to maintain the exterior of the pipe at a temperature of from 0°C to 5°C.

The inventors have found that when the pipe is heated, e.g. when a heating fluid is applied to the exterior of the pipe, the pressures required to pass the frozen confection through the pipe can drop considerably, which is particularly useful if it is desired to pass a frozen confection through the pipe that is at a particularly low temperature and would otherwise be highly resistant to pass through the pipe.

Frozen confection means a confection made by freezing a pasteurised mix of ingredients such as water, fat, sweetener, protein (normally milk proteins), and optionally other ingredients such as emulsifiers, stabilisers, colours and flavours. Frozen confections may be aerated. Frozen confections include ice cream, gelato, frozen yoghurt, sorbets, granitas, shaved ices and the like. Preferably the frozen confectionery is an ice cream.

The term "aerated" means that gas has been intentionally incorporated into the product, such as by mechanical means. The gas can be any food-grade gas such as air, nitrogen or carbon dioxide. The extent of aeration is typically defined in terms of "overrun" (OR). In the context of the present invention, %overrun is defined in volume terms (measured at atmospheric pressure) as:

$$OR = \frac{\text{volume of frozen aerated product} - \text{volume of premix at ambient temp}}{\text{volume of premix at ambient temp}} \times 100$$

The amount of overrun present in the product will vary depending on the desired product characteristics. In the context of the present invention the level of overrun is typically from 0 to 150%, preferably from 60 to 150%, more preferably from 60 to 100%.

Unless defined otherwise, all technical and scientific terms used herein have the same meaning as commonly understood by one of ordinary skill in the art (e.g. in frozen food manufacture). Definitions and descriptions of various terms and techniques used in frozen confectionery manufacture are found in "Ice Cream", 7th Edition R.T. Marshall, H.D. Goff and R.W. Hartel, Kluwer Academic/ Plenum Publishers, New York 2013.

Preferably the chilled continuous flow of aerated frozen confection has a temperature of from -5°C to -19°C, preferably from -10 to -19°C.

Preferably the chilled continuous flow of aerated frozen confection is provided by feeding a continuous flow of starter aerated frozen confection to the inlet of a barrel of a screw extruder, the walls of which are cooled such that the chilled continuous flow of aerated frozen confection exits the screw extruder. This is typically achieved by the extrusion preferably being carried out with a chilled barrel wall temperature e.g. of from -35 to - 15°C. This may be carried out by using a low temperature cooling fluid, such as liquid ammonia.

Thus, the chilled aerated frozen confection then passes through the pipe and the heat of the pipe raises the outer temperature of the frozen confection, which eases its passing through the pipe.

Preferably starter aerated frozen confection is at a temperature of from -2 to -10°C. The starter aerated frozen confection may be made by any known process, such as by use of a scraped surface heat exchanger, which are generally capable of producing a frozen confection in the range of from -2 to -10°C, but typically closer to -5 to -8°C.

Thus, a preferred process is a process for the manufacture of a continuous stream of extruded frozen confection, the process comprising the steps of:

i) preparing a starter aerated frozen confection;
ii) extruding a continuous flow of the starter aerated frozen confection through the barrel of the screw extruder to produce the chilled continuous stream of extruded aerated frozen confection;
iii) passing the chilled continuous stream of extruded aerated frozen confection to the inlet of the pipe, thereby producing the continuous stream of aerated frozen confection from the outlet of the pipe.

Step iii) plays a role in lowering the typically high pressures upon leaving the screw extruder at the end of step ii) and to smooth out the flow.

This produces a continuous stream of extruded frozen confection having an external temperature that is higher than its core temperature. Such a frozen confection is thus generally at a temperature of from -10 to -19°C but has an outer layer that is warmer, e.g. at a temperature of from -5 to 0°C. it has been found that this warmed outer layer greatly reduces the pressures required to produce the continuous stream of extruded frozen confection.

The present process is particularly suitable for producing a continuous sequence of dimensionally similar aerated frozen confections, the process starting with the process described above, which is followed by the step of: sequentially cutting through the continuous stream of aerated frozen confection to produce the continuous sequence of dimensionally similar aerated frozen confections.

Additionally, this may be further applied to a process for producing a continuous sequence of dimensionally similar sticked aerated frozen confections, the process starting with the above process, and wherein: prior to the cutting, sequentially inserting a plurality of grippable sticks into the continuous stream of extruded aerated frozen confection at equally spaced intervals, and such that a grippable length of each grippable stick protrudes from the continuous stream of aerated frozen confection, the cutting step thereby producing the continuous sequence of dimensionally similar sticked aerated frozen confections.

Such dimensionally similar sticked frozen confections may then be subjected to subsequent processing steps, such as being conveyed by its stick to and through a dipping stage and also preferably to a packaging stage.

Typically, the pipe will terminate with a nozzle. Such a nozzle may be independently heated, e.g. by means of a water jacket in a similar manner as for the pipe, e.g. by use of a water jacket with an inlet temperature of less than 15°C, more preferably less than 10°C. For example, this may help to maintain the exterior of the pipe at a temperature of from 0°C to 5°C.

Preferably the nozzle comprises an elongate slit aligned in the extrusion direction of the continuous stream of aerated frozen confection, exposing an elongate strip of the continuous stream of extruded aerated frozen confection. For example, the slit may have a width of from 10 to 20mm and a length of greater than 30mm.

As the frozen confection enters the nozzle, it may change the shape of its cross-section, e.g. from a circular cross-section to the cross-section of the final frozen confection product. It has been found that keeping a similar cross-sectional area during this transition helps to reduce the pressure in the pipe and nozzle. Therefore, preferably the ratio of the cross-sectional area of the pipe to that of the nozzle, is from 1.5:1 to 1:1.5, preferably from 1.2:1 to 1:1.2.

As previously discussed, the present invention allows for the production of packaged frozen confections without the need for a hardening tunnel. Therefore preferably each aerated frozen confection proceeds through at least one subsequent processing step without any additional cooling applied.

The present invention allows for a greatly accelerated manufacturing speed, and can provide the continuous stream of frozen confection at an extrusion speed greater than 5cm/s, preferably from 5 to 20cm/s, more preferably from 8 to 15 cm/s.

The invention will now be illustrated by way of example, and with reference to the following figures, in which:

Figure 1 is a flow chart showing a preferred process according to the present invention.

Figure 2 is a perspective view of an apparatus for use in carrying out the process of the present invention.

Figure 3 is an image of an apparatus for carrying out the process of the present invention.

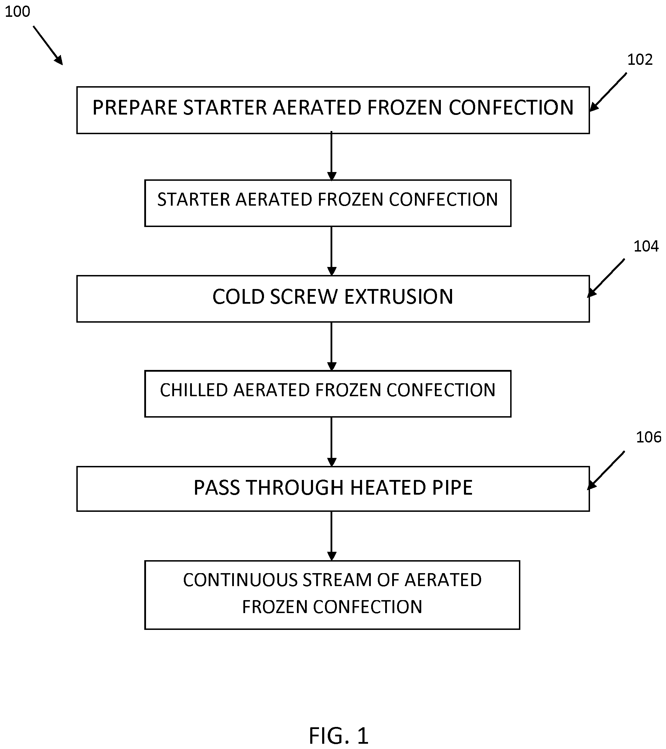

Turning to the figures, figure 1 shows the process 100 for the manufacture of a continuous stream of aerated frozen confection according to the present invention. The process starts with the step of preparing 102 starter aerated frozen confection, e.g. in a conventional scraped surface heat exchanger.

This is then passed to a cold screw extrusion 104 step carried out with a chilled barrel wall temperature e.g. of from -35 to -15°C. This may be carried out by using a low temperature cooling fluid, such as liquid ammonia. The outlet of the cold screw extrusion is a chilled aerated frozen confection that may be at a temperature of from -5°C to -19°C, preferably from -10 to -19°C. As such there is no need for a separate hardening stage, as the frozen confection is already at a sufficiently low temperature for subsequent processing.

This chilled aerated frozen confection is then passed through a pipe that is heated on its outer surface by a water jacket with an inlet temperature of less than 15°C, e.g. around 10°C. This helps to maintain the exterior of the pipe at a temperature of from 0°C to 5°C. This heating of the pipe provides selective heating of the aerated frozen confection so that it has an external temperature that is higher than a core temperature.

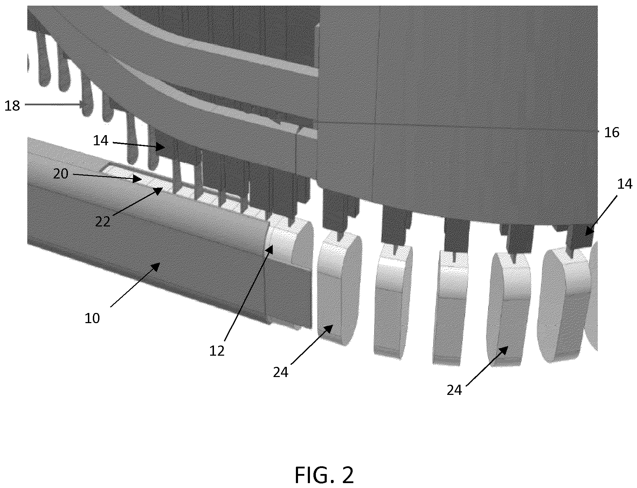

Figure 2 shows a nozzle 10 through which is flowing a continuous stream of extruded aerated frozen confection 12 which leaves the pipe via a nozzle in a horizontal extrusion direction and at an extrusion speed. Above the nozzle 10 is a plurality of equally spaced apart supporting carriages 14 moveably mounted in a frame 16, and arranged to move in the horizontal extrusion direction and at essentially the same speed as the extrusion speed. Each carriage 14 grips a grippable length of a stick 18.

The continuous stream of extruded aerated frozen confection 12 has been previously screw extruded and has a core temperature of from -10°C to -19°C, which results in a hardened physical condition. However, as the pipe and the nozzle are heated, the external temperature is higher than the core temperature. This provides a liquefying effect at the walls of the pipe, greatly reducing the resistance to being extruded therethrough.

The nozzle **10** comprises an elongate slit **20** aligned in the extrusion direction exposing an elongate strip **22** of extruded aerated frozen confection.

In operation of the apparatus, as the carriages **14** are moved horizontally they also descend vertically, so that each gripped stick **18** is forced into the aerated frozen confection **22** as the carriage **14** moves horizontally in the direction of the elongate slit **20** in the nozzle **10**. As the horizontal velocity of the carriages **14** is essentially the same as the extrusion speed, the sticks **18** are inserted with no relative horizontal movement between the sticks **18** and the extruded aerated frozen confection **22**.

Once the aerated frozen confection **22** leaves the nozzle, a blade (not shown) cuts completely through the cross-section of the aerated frozen confection **22** at a location midway between the location of two adjacent inserted sticks **14.** This can be mechanically arranged by synchronising the movement of the blade with the location of the carriages in the frame.

This results in a sequence of a plurality of dimensionally similar sticked frozen confections **24,** supported in free space during and following cutting. As the aerated frozen confection **22** is already hardened, there is no need for a hardening tunnel, and the sticked frozen confections **24** can then be subsequently conveyed by its respective supporting carriage **14** directly to at least one subsequent processing step, such as coating, wrapping and packaging steps.

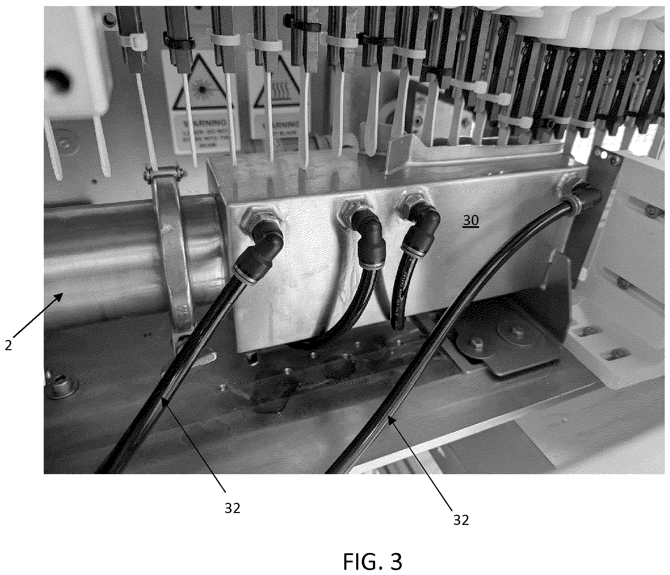

Figure 3 shows a preferred arrangement, wherein a pipe 2 is shown feeding into a nozzle that is entirely obscured from view by a surrounding water jacket **30.** The water jacket has a number of inlet and outlet pipes **32.** The action of the water jacket is to raise temperature of the pipe such that the continuous stream of aerated frozen confection has an external temperature that is higher than a core temperature

**Claims**

1. A process for the manufacture of a continuous stream of aerated frozen confection, the process comprising the steps of feeding a chilled aerated frozen confection to the inlet of a pipe and the continuous stream of aerated frozen confection exiting via an outlet of the pipe, wherein the temperature of the pipe is raised such that the continuous stream of aerated frozen confection has an external temperature that is higher than a core temperature.

2. A process according to claim 1, wherein a heating fluid is applied to a portion of the exterior of the pipe.

3. A process according to claim 1 or claim 2, wherein the chilled aerated frozen confection has a temperature of from -5°C to -19°C, preferably from -10 to -19°C.

4. A process according to claim 3, wherein the chilled aerated frozen confection is provided by:
   feeding a continuous flow of starter aerated frozen confection to the inlet of a barrel of a screw extruder, the walls of which are cooled such that the chilled aerated frozen confection exits the screw extruder.

5. A process according to claim 4, wherein starter aerated frozen confection has a temperature of from -2 to -10°C.

6. A process for the manufacture of a continuous stream of extruded frozen confection according to claims 1 and 4, wherein the process comprises the steps of:

   i) preparing the starter aerated frozen confection;
   ii) extruding a continuous flow of the starter aerated frozen confection through the barrel of the screw extruder to produce the chilled aerated frozen confection;
   iii) passing the chilled aerated frozen confection to the inlet of the pipe, thereby producing the continuous stream of aerated frozen confection from the outlet of the pipe.

7. A process for producing a continuous sequence of dimensionally similar aerated frozen confections, the process starting with a process according to any one of the preceding claims, which is followed by the step of:
   sequentially cutting through the continuous stream of aerated frozen confection to produce the continuous sequence of dimensionally similar aerated frozen confections.

8. A process for producing a continuous sequence of dimensionally similar sticked aerated frozen confections, the process starting with a process according to claim 7, and wherein:
   prior to the cutting, sequentially inserting a plurality of grippable sticks into the continuous stream of extruded aerated frozen confection at equally spaced intervals, and such that a grippable length of each grippable stick protrudes from the continuous stream of aerated frozen confection, step iv) thereby producing the continuous sequence of dimensionally similar sticked aerated frozen confections.

9. A process according to any one of the preceding claims, wherein the pipe terminates in a nozzle.

10. A process according to claim 9, wherein the nozzle is heated independently to the heating of the pipe by applying a heating fluid to the exterior of the pipe.

11. A process according to claim 9 or claim 10, wherein the nozzle comprises an elongate slit aligned in the extrusion direction of the continuous stream of extruded aerated frozen confection, exposing an elongate strip of the continuous stream of extruded aerated frozen confection.

12. A process according to claim 11, wherein the slit has a width of from 10 to 20mm and a length of greater than 30mm.

13. A process according to any one of claims 8 to 11, wherein the ratio of the cross-sectional area of the pipe to that of the nozzle, is from 1.5:1 to 1:1.5, preferably from 1.2:1 to 1:1.2.

14. A process according to any one of claims 2 to 10, wherein each dimensionally similar aerated frozen confection proceeds through at least one subsequent processing step without any additional cooling applied.

15. A process according to any one of the preceding claims, wherein the continuous stream of extruded frozen confection has an extrusion speed greater than 5cm/s, preferably from 5 to 20cm/s, more preferably from 8 to 15 cm/s.

100

PREPARE STARTER AERATED FROZEN CONFECTION — 102

STARTER AERATED FROZEN CONFECTION

COLD SCREW EXTRUSION — 104

CHILLED AERATED FROZEN CONFECTION

PASS THROUGH HEATED PIPE — 106

CONTINUOUS STREAM OF AERATED FROZEN CONFECTION

FIG. 1

FIG. 2

FIG. 3

Europäisches
Patentamt

European
Patent Office

Office européen
des brevets

# EUROPEAN SEARCH REPORT

**Application Number**

EP 24 21 3572

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/142462 A1 (ZHU SHIPING [GB]) 4 June 2009 (2009-06-04) | 1-7,14, 15 | INV. A23G9/14 |
| Y | * paragraphs [0011], [0045]; claims 2,8,11; figure 1; examples 1-5 * ----- | 8-13 | A23G9/16 A23G9/20 A23G9/26 |
| Y | US 2 859 714 A (CUMMINGS THOMAS N ET AL) 11 November 1958 (1958-11-11) | 8-13 | A23G9/28 A23G9/46 |
| A | * column 3 - column 4; claim 1 * ----- | 1-7,15 | A23G9/48 A23G9/50 A23G9/22 |

**TECHNICAL FIELDS SEARCHED (IPC)**

A23G

The present search report has been drawn up for all claims

| Place of search | Date of completion of the search | Examiner |
|---|---|---|
| The Hague | 14 April 2025 | Gieler, Melanie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 3572

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2025

| Patent document cited in search report | Publication date | Patent family member(s) | Publication date |
|---|---|---|---|
| US 2009142462 A1 | 04-06-2009 | EA 201000911 A1 | 29-10-2010 |
| | | EP 2222184 A1 | 01-09-2010 |
| | | ES 2390201 T3 | 07-11-2012 |
| | | US 2009142462 A1 | 04-06-2009 |
| | | WO 2009068428 A1 | 04-06-2009 |
| US 2859714 A | 11-11-1958 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050214416 A
- US 20060233919 A1
- US 6228412 B
- WO 2009068428 A1

**Non-patent literature cited in the description**

- Ice Cream
- **R.T. MARSHALL** ; **H.D. GOFF** ; **R.W. HARTEL**. Ice Cream. Kluwer Academic/ Plenum Publishers, 2013